(19) Europäisches Patentamt
European Patent Office
Office européen des brevets

(11) Veröffentlichungsnummer: **0 001 071**
**B1**

(12) # EUROPÄISCHE PATENTSCHRIFT

(21) Anmeldenummer: **78100726.5**

(22) Anmeldetag: **23.08.78**

(51) Int. Cl.³: **C 08 F 4/64,** C 08 F 10/00

(54) **Verfahren zum Herstellen einer Titan enthaltenden Komponente für Katalysatoren des Ziegler-Natta-Typs**

(30) Priorität: **01.09.77 DE 2739382**

(43) Veröffentlichungstag der Anmeldung:
**21.03.79 Patentblatt 79/06**

(45) Bekanntmachung des Hinweises auf die Patenterteilung:
**14.01.81 Patentblatt 81/02**

(84) Benannte Vertragsstaaten:
**BE DE FR GB NL**

(56) Entgegenhaltungen:
**DE - A - 2 029 890**
**FR - A - 1 160 379**
**FR - A - 1 306 432**
**FR - A - 2 066 544**
**FR - A - 2 097 891**
**US - A - 3 530 107**

(73) Patentinhaber: **BASF Aktiengesellschaft**
**Carl-Bosch-Strasse 38**
**D - 6700 Ludwigshafen (DE)**

(72) Erfinder: **Mueller-Tamm, Heinz, Dr.**
**Ottweiler Strasse 9**
**D - 6700 Ludwigshafen (DE)**
**Jaggard, James F. R. Dr.**
**Bruesseler Ring 45**
**D - 6700 Ludwigshafen (DE)**
**Schick, Hans, Dr.**
**Am Aubuckel 30**
**D - 6800 Mannheim 51 (DE)**

**EP 0 001 071 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# Verfahren zum Herstellen einer Titan enthaltenden Komponente für Katalysatoren des Ziegler-Natta-Typs

Die vorliegende Erfindung betrifft ein Verfahren zum Herstellen einer Titan enthaltenden Komponente eines Katalysators für die Homo- und Copolymerisation von $C_3$- bis $C_6$- $\alpha$-Monoolefinen nach Ziegler-Natta.

Verfahren dieser Art sind einer Reihe von Varianten bekannt; sie sind vornehmlich auf das Ziel gerichtet, solche Titan enthaltenden Komponenten zu gewinnen, die — nach dem Aktivieren mit aluminiumorganischen Verbindungen oder dergleichen — Katalysatoren ergeben, die bei der Polymerisation von $\alpha$-Olefinen zu hohen spezifischen Ausbeuten an Poly-$\alpha$-olefinen und/oder zu Poly-$\alpha$-olefinen mit einem relativ hohen Anteil an stereoregulärem Polymerisat führen.

Die bekannten Verfahren haben zu beachtlichen Erfolgen geführt; von gewissem Nachteil ist jedoch, daß die entsprechenden Titan enthaltenden Komponenten beim Einsatz im Rahmen von Katalysatoren des Ziegler-Natta-Typs bei der Polymerisation von $\alpha$-Olefinen einerseits zwar zu Polymerisaten führen, die eine relativ hohe Stereoregularität (Isotaktizität) haben, andererseits aber die Polymerisate nur in relativ geringen spezifischen Ausbeuten liefern; — oder vice versa.

Der vorliegenden Erfindung lag die Aufgabe zugrunde, ein Verfahren der eingangs definierten Art aufzuzeigen, mit dem es möglich ist, solche Titan enthaltende Komponenten zu erhalten, die mit dem vorerwähnten Nachteil nicht oder in erheblich geringerem Maß belastet sind.

Es wurde gefunden, daß die gestellte Aufgabe gelöst werden kann, wenn man unter bestimmten physikalischen Mahlbedingungen arbeitet, die Ausgangsstoffe in spezieller Weise zusammenführt, daraufhin eine gewisse Zeit miteinander vermahlt, anschließend — gewünschtenfalls — einer besonderen Zwischenbehandlung unterzieht, sodann mit einem ausgewählten Promotor behandelt, daraufhin das dabei resultierende festphasige Produkt gewinnt und dieses schließlich — gewünschtenfalls — bei tiefer Temperature nachvermahlt.

Gegenstand der vorliegenden Erfindung ist dementsprechend ein Verfahren zum Herstellen einer Titan enthaltenden Komponente eines Katalysators für die Homo- und Copolymerisation von $C_3$- bis $C_6$-$\alpha$-Monoolefinen nach Ziegler-Natta, wobei man

(a) eine Titan enthaltende Verbindung der allgemeinen Formel

$$TiCl_3 \cdot nAlCl_3,$$

worin

n für eine Zahl im Bereich von 0,01 bis 1, insbesondere von 0,1 bis 0,4, steht, und

(b) einen Äther, der insgesamt 4 bis 30, insbesondere 6 bis 16 Kohlenstoffatome enthält, und die allgemeine Formel

$$R^1—O—R^2$$

hat, worin

$R^1$ und $R^2$ gleich oder verschieden sind und stehen für (I) eine offenkettige 2 bis 15, insbesondere 3 bis 8 Kohlenstoffatome aufweisende Alkylgruppe, (II) eine Phenylgruppe oder (III) eine Alkylphenylgruppe mit einer 1 bis 8 Kohlenstoffatome aufweisenden Alkylgruppe, oder

einen Ester, der insgesamt 2 bis 34, insbesondere 2 bis 18 Kohlenstoffatome enthält und die allgemeine Formel

$$R^3—O—CO—R^4 \quad \text{bzw.}$$

$$R^3—O—CO—\underset{R^4}{\underset{|}{C}}=\underset{R^4}{\underset{|}{CH}}$$

hat, worin stehen

$R^3$ für (I) eine 1 bis 16, insbesondere 1 bis 8 Kohlenstoffatome aufweisende Alkylgruppe oder (II) eine insgesamt 7 bis 23, insbesondere 7 bis 14 Kohlenstoffatome aufweisende Phenylalkylgruppe, wobei bis zu 5 Wasserstoffatome des Phenylrestes durch 1 bis 4 Kohlenstoffatome aufweisende Alkylgruppen substituiert sein können.

$R^4$ für (I) Wasserstoff, (II) eine 1 bis 18, insbesondere 2 bis 12 Kohlenstoffatome aufweisende Alkylgruppe, (III) eine insgesamt 7 bis 23, insbesondere 7 bis 14 Kohlenstoffatome aufweisende Phenylalkylgruppe, wobei bis zu 5 Wasserstoffatome des Phenylrests durch 1 bis 4 Kohlenstoffatome aufweisende Alkylgruppen substituiert sein können, (IV) eine Phenylgruppe oder (V) eine insgesamt 7 bis 23, insbesondere 7 bis 14 Kohlenstoffatome aufweisende Alkylphenylgruppe, wobei bis zu 4 Wasserstoffatome des Phenylrests durch 1 bis 5 Kohlenstoffatome aufweisende Alkylgruppen substituiert sein können,

miteinander vermahlt.

Das erfindungsgemäße Verfahren ist dadurch gekennzeichnet, daß man

(1) mit einer Kugelschwingmühle arbeitet, die eine Mahlbeschleunigung von 30 bis 80, insbesondere von 45 bis 55 $m.sec^{-2}$ hat,

(2) die Mühle zunächst mit der Titan enthaltenden Verbindung (a) beschickt und — gegebenenfalls — bei einer Temperatur von $-50$ bis $+100$, insbesondere $-30$ bis $+50°C$ über eine Zeitspanne von 0,5 bis 100, insbesondere 2 bis 20 Stunden in Abwesenheit von Verdünnungsmitteln betriebt, dann

(3) unter Mahlen bei einer Temperatur des Mahlguts von − 50 bis + 80, insbesondere von −30 bis +60°C die einem Molverhältnis Aluminium in der Titan enthaltenden Verbindung (a):Äther bzw. Ester (b) von 1:5 bis 1:0,05, insbesondere von 1:2 bis 1:0,7 entsprechende Menge des Äthers bzw. Esters (b) mit einer Geschwindigkeit von 0,01 bis 200, insbesondere von 1 bis 80 ml pro Minute pro 2,5 kg Titan enthaltende Verbindung (a) kontinuierlich oder in kleinen Portionen und in Abwesenheit von Verdünnungsmitteln zugibt, daraufhin

(4) unter Mahlen das Mahlgut auf eine Temperatur von + 10 bis + 100, insbesondere von + 20 bis + 60°C bringt und 5 bis 150, insbesondere 15 bis 80 Stunden im Bereich dieser Temperaturen hält, anschließend

(5) — gegebenenfalls — das gemäß (4) erhaltene Produkt mit der mindestens 0,6-fachen seiner Gewichtsmenge eines unter Normalbedingungen flüssigen und unterhalb von 150, insbesondere unterhalb von 100°C siedenden Kohlenwasserstoffs wäscht sowie trocknet, hierauf

(6) — gegebenenfalls — das gemäß (4) bzw. (5) erhaltene Produkt für eine Zeitspanne von 5 bis 60, insbesondere von 10 bis 30 Minuten bei einer Temperatur von − 50 bis − 10, insbesondere von − 30 bis − 10°C in Abwesenheit von Verdünnungsmitteln vermahlt, sodann

(7) das gemäß (4), (5) bzw. (6) erhaltene Produkt zusammenbringt mit der mindestens 0,5-fachen seiner Gewichtsmenge eines Promotors der allgemeinen Formel

$$SiX_xR^5_{4-x}$$

— mit der Maßgabe, daß beim Vorliegen von zwei oder mehr Resten $R^5$ in der Verbindung, diese Rest einander gleich sind —,

$$SiX_yR^5_{4-y}$$

— mit der Maßgabe, daß beim Vorliegen von zwei oder mehr Resten $R^5$ in der Verbindung, zumindest zwei dieser Reste voneinander verschieden sind —,

$$SnX_yR^5_{4-y}$$

$$Si(OR^5)_zR^5_{4-z}$$

$$SiPhR^5_3$$

— mit der Maßgabe, daß beim Vorliegen von zwei oder mehr Resten $R^5$ in der Verbindung, diese Reste einander gleich oder zumindest zwei dieser Reste voneinander verschieden sind —,

wobei in der allgemeinen Formel stehen
x für 0 bis 4, insbesondere 1 bis 3,
y für 0 bis 3, insbesondere 1 bis 3,
z für 1 bis 3,
X für Halogen, insbesondere Chlor,
$R^5$ für (I) Wasserstoff — mit der Maßgabe, daß in keiner der Verbindungen mehr als drei dieser Reste für Wasserstoff stehen —, (II) eine 1 bis 12, insbesondere 1 bis 6 Kohlenstoffatome aufweisende Alkylgruppe oder (III) eine Phenylgruppe,
Ph für eine Phenylgruppe, bei der 0 bis 5 Wasserstoffatome des Phenylrestes substituiert sind durch eine 1 bis 5 Kohlenstoffatome aufweisende Alkyl- bzw. Alkoxygruppe, eine Phenyl- bzw. Phenoxygruppe, eine Chloratom oder eine Trialkylsilylgruppe mit 1 bis 5 Kohlenstoffatome aufweisenden Alkylgruppen,

das Ganze über eine Zeitspanne von 0,2 bis 10, insbesondere 0,5 bis 5 Stunden auf einer Temperatur von 0 bis 250, insbesondere 20 bis 150°C hält, und in ein festphasiges sowie ein flüssigphasiges Produkt auftrennt und daraufhin

(8) das gemäß (7) erhaltene festphasige Produkt mit der mindestens 0,4-fachen seiner Gewichtsmenge eines unter Normalbedingungen flüssigen und unterhalb von 150, insbesondere unterhalb von 100°C siedenden Kohlenwasserstoffs oder eines unter (7) aufgeführten Promotors wäscht sowie trocknet, und schließlich

(9) — gegebenenfalls — das gemäß (8) erhaltene Produkt für eine Zeitspanne von 5 bis 60, insbesondere von 10 bis 30 Minuten bei einer Temperatur von −50 bis 0, insbesondere von −30 bis −10°C in Abwesenheit von Verdunnungsmitteln nachvermahlt.

Der bisherige Stand der Technik, der diesem neuen Verfahren artmäßig am nächsten verwandt ist, ist in den FR—A—2 066 544 und FR—A—2 097 891 beschrieben: Gemäß diesen Publikationen können Titan enthaltende Komponenten für Katalysatoren des Ziegler-Natta-Typs hergestellt werden, indem man (i) Titantetrachlorid mit Aluminium reduziert, (ii) das dabei erhaltene Titantrichlorid-Produkt in Abwesenheit (FR—A—2 097 891) oder in Anwesenheit (FR—A—2 066 544) bestimmter Modifizierungsmittel — darunter auch Äther und Ester — solange vermahlt, bis die $\alpha$- oder $\gamma$-Kristallstruktur des Titantrichlorids im Röntgenbeugungsspektrum nicht mehr identifiziert werden kann, und dann (iii) das so erhaltene Vermahlungsprodukt mit einem inerten organischen Lösungsmittel — welches gewünschtenfalls im Gemisch mit andersartigen Stoffen, darunter auch bestimmten Silizium enthaltenden Stoffen, vorliegen kann — extrahiert und mit dem extrahierten Feststoff die spezielle Titan enthaltende Katalysatorkomponente gewinnt.

Bei dem Verfahren des Standes der Technik kommt es also vor allem auf einen bestimmten Grad der Vermahlung sowie einen Extraktionsvorgang an.

Demgegenüber ist — wie eingangs bereits aufgezeigt — für das erfindungsgemäße Verfahren u.a. essentiell, daß man die Ausgangsstoffe in spezieller Weise zusammenführt und mit einem ausgewählten Promotor behandelt.

Zur stofflichen Seite des neuen Verahrens ist das Folgende zu sagen:

Titan enthaltende Verbindungen (a) mit der angegebenen allgemeinen Formel sind die einschlägig üblichen, z.B. solche, wie sie durch Kokristallisation von $TiCl_3$ und $AlCl_3$ oder auch Reduktion von $TiCl_4$ mittels Aluminium bzw. Gemischen aus Aluminium und Titan erhalten werden können. Besonders gut geeignet sind Kokristallisate der Formel

$$TiCl_3 \cdot \frac{1}{3} AlCl_3.$$

In Betracht kommende Titan enthaltende Verbindungen (a) sind im Handel erhältlich, so daß sich nähere Ausführungen erübrigen.

Auch als Äther (b) mit der angegebenen allgemeinen Formel kommen die einschlägig üblichen, dieser Formel gehorchenden in Betracht, insbesondere solche, in deren Formel $R^1$ bzw. $R^2$ stehen für eine Methyl-, Äthyl-, Propyl-, Butyl-, Amyl-, Hexyl- oder Phenylgruppe. Geeignete Verbindungen dieser Art sind beispielsweise beschrieben in der US-Patentschrift 3 116 274.

Namentliche Beispiele für gut geeignete Äther (b) sind der Di-n-propyl, Di-n-butyl-, Di-n-amyl-, Di-isoamyl- und Di-n-hexyläther sowie der Methyl- und Äthylphenyläther.

Besonders gut geeignete Äther (b) sind der Di-n-butyl, Di-isoamyl- und Methylphenyläther.

Als Ester (b) mit der angegebenen allgemeinen Formel kommen ebenfalls die einschlägig üblichen, dieser Formel gehorchenden in Betracht, insbesondere solche, in deren Formel stehen $R^3$ für eine Methyl-, Äthyl-, Propyl-, n-Butyl-, n-Pentyl-, i-Pentyl-, n-Hexyl- oder Benzyl-Gruppe, $R^4$ für Wasserstoff oder eine Methyl-, Äthyl-, n-Propyl-, n-Butyl-, n-Pentyl-, i-Pentyl-, n-Hexyl-, n-Heptyl-, n-Octyl-, Phenyl-, Benzyl-, 1-Phenyläthyl-, 2-Phenyläthyl-, 3-Phenylpropyl-, 4-Phenylbutyl- oder 5-Phenylpentyl-Gruppe.

Namentliche Beispiele für gut geeignete Ester (b) sind der Essigsäureäthylester, Essigsäurebutylester, Propionsäureäthylester, n-Buttersäureäthylester, n-Valeriansäureäthylester, Phenylessigsäureäthylester, 3-Phenylpropionsäureäthylester, 4-Phenylbuttersäureäthylester und Acrylsäurebutylester sowie Methylacrylsäurebutylester.

Besonders gut geeignete Ester (b) sind der Propionsäureäthylester, n - Valeriansäureäthylester, Phenylessigsäureäthylester, 3-Phenylpropionsäureäthylester, 4-Phenylbuttersäureäthylester und Methacrylsäurebutylester.

Bei den Promotoren kommen vornehmlich solche in Betracht, in deren oben angegebenen allgemeinen Formeln $R^5$ steht für eine Methyl-, Äthyl-, n-Propyl-, i-Propyl-, n-Butyl-, i-Butyl-, n-Pentyl-, i-Pentyl- oder n-Hexylgruppe, und Ph für eine Phenyl-, Mono- bzw. Di-alkoxyphenyl-, Mono, bzw. Di-chlorphenyl-, Mono- bzw. Dialkylphenyl oder Mono- bzw. Di-(trimethylsilyl)-phenylgruppe.

Namentliche Beispiele für gut geeignete Promotoren sind Methyltrichlorsilan, Dimethyldichlorsilan, Trimethylchlorsilan, Dimethylphenylchlorsilan, Phenyltrichlorsilan, Diphenyldichlorsilan, Tetramethylsilan, Triäthylsilan, Phenyltrimethylsilan, o-, m- sowie p-Methylphenyltrimethylsilan, Triäthylchlorstannan und Tri-n-butylchlorstannan.

Besonders gut geeignete Promotoren sind Trimethylchlorsilan, Phenyltrimethylsilan, m-Methylphenyltrimethylsilan und Tri-n-butylchlorstannan.

Der für die Stufen (5) und (8) in Betracht kommende flüssige Kohlenwasserstoff kann ein Kohlenwasserstoff der Art sein, die üblicherweise mit Titan enthaltenden Komponenten für Katalysatoren des Ziegler-Natta-Typs ohne Schaden für den Katalysator bzw. dessen Titan enthaltende Komponente zusammengebracht werden; — z.B. bei der Polymerisation von $\alpha$-Monoolefinen. Als Beispiele für geeignete Kohlenwasserstoffe seien genannt: Pentane, Hexane, Heptane, Benzine und Cyclohexan.

Die Durchführung des erfindungsgemäßen Verfahrens ist einfach und für den Fachmann ohne Erläuterungen möglich. Lediglich zu den Eventualmaßnahmen — also zum Betreiben oder Nichtbetreiben der Mühle in Stufe (2) sowie zur Durchführung oder Nichtdurchführung der Stufen (5), (6) und (9) — ist das folgende zu bemerken:

Ein Mahlen in Stufe (2) ist im allgemeinen dann angezeigt, wenn die eingesetzte Titan enthaltende Verbindung (a) relativ grobkörnig ist.

Die Durchführung der Stufe (5) empfiehlt sich meist dann, wenn das gemäß Stufe (4) erhaltene Produkt von klebriger Konsistenz ist.

Wie sich gezeigt hat, ist es zweckmäßig, Stufe (6) in dem Fall durchzuführen, bei dem das gemäß Stufe (4) bzw. (5) erhaltene Produkt noch relativ grobkörnig ist.

Die Durchführung von Stufe (9) bringt im allgemeinen dann einen Vorteil, wenn man die resultierende Katalysator-Komponente als solche — d.h. in trockenem, leicht dosierbaren Zustand — einsetzen will.

Die nach dem erfindungsgemäßen Verfahren hergestellten Titan enthaltenden Komponenten für Katalysatoren des Ziegler-Natta-Typs lassen sich bei der Polymerisation von $\alpha$-Olefinen in einschlägig üblicher Weise einsetzen, d.h. man wird diese Titan-Komponenten im allgemeinen zusammen mit einem metallorganischen Aktivator verwenden, insbesondere mit Aluminiumalkylverbindungen der Formeln $Al(Alkyl)_3$ bzw. $ClAl(Alkyl)_2$, die 1 bis 8 Kohlenstoffatome per Alkylrest aufweisen, und vor allem mit Triäthylaluminium bzw. Diäthylaluminiumchlorid.

Besonders gute Ergebnisse werden erhalten bei der Trockenpolymerisation von $\alpha$-Olefinen, d.h. der Polymerisation in Abwesenheit flüssiger

Hilfsmedien; aber auch die Polymerisation in Anwesenheit flüssiger Hilfsmedien ist mit gutem Erfolg möglich. Das Molekulargewicht läßt sich durch die üblichen Regler, insbesondere Wasserstoff, einstellen. Geeignete zu polymerisierende $\alpha$-Olefine sind solche mit 3 bis 6 Kohlenstoffatomen, insbesondere Propylen, Buten-1 und 4-Methylpenten-1.

Beispiel 1.

*Herstellung der Titan enthaltenden Komponente*

Es wird ausgegangen von

a) einer Titanverbindung der Formel

$$TiCl_3 . \frac{1}{3} AlCl_3 \text{ und}$$

b) Diäthyläther.

Die Vermahlung findet in einer Kugelschwingmühle statt, deren Nutzvolumen 10 Liter beträgt.

Des weiteren wird so verfahren, daß man

(1) die Mühle mit einer Mahlbeschleunigung von 47 $m.sec^{-2}$ betriebt,

(2) die Mühle zunächst mit 2,2 kg der Titan enthaltenden Verbindung (a) beschickt und bei einer Temperatur von + 35°C über eine Zeitspanne von 16 Stunden in Abwesenheit von Verdünnungsmitteln betreibt, dann

(3) unter Mahlen bei einer Temperatur des Mahlgutes von −12°C die einem Molverhältnis Aluminium in der Titan enthaltenden Verbindung (a): Äther (b) von 1:1 entsprechende Menge des Athers (b) mit einer Geschwindigkeit von 9,5 ml/Minute pro 2,5 kg Titan enthaltende Verbindung (a) kontinuierlich und in Abwesenheit von Verdünnungsmitteln zugibt, daraufhin

(4) unter Mahlen das Mahlgut auf eine Temperatur von + 36°C bringt und 17 Stunden auf dieser Temperatur hält, anschließend

(5) das gemäß (4) erhaltene Produkt mit der 0,75-fachen seiner Gewichtsmenge Hexan wäscht sowit trocknet, hierauf

(6) das gemäß (5) erhaltene Produkt für eine Zeitspanne von 25 Minuten bei einer Temperatur von − 15°C in Abwesenheit von Verdünnungsmitteln vermahlt, sodann

(7) das gemäß (6) erhaltene Produkt zusammenbringt mit der 1,2-fachen seiner Gewichtsmenge Trimethylchlorsilan, das Ganze über eine Zeitspanne von 1 Stunde auf einer Temperatur von + 58°C hält, und in ein festphasiges sowie ein flüssigphasiges Produkt auftrennt und daraufhin

(8) das gemäß (7) erhaltene festphasige Produkt mit der 4,1-fachen seiner Gewichtsmenge Heptan wäscht sowie trocknet.

(9) Stufe 9 entfällt.

*Polymerisation mittels der Titan enthaltenden Komponente*

1,0 g der Titan enthaltenden Komponente sowie 1,8 g Diäthylaluminiumchlorid werden in einen 2-l-Rührkolben gegeben, der mit 1,5 l trockenem Heptan beschickt ist. Sodann wird unter Rühren und bei den — jeweils durch Regelung konstant gehaltenen — Parametern: Propylendruck = 1 bar, Temperatur = 60°C, über eine Zeitspanne von 5 Stunden polymerisiert, wonach die Polymerization durch Zugabe von 20 ml Methanol abgebrochen wird. Hierauf wird das Suspensionsmedium durch Destillation abgetrennt.

Auf diese Weise werden 101 g Polypropylen erhalten, was einer Produktivität von 122 Gewichtsteilen Polypropylen pro Gewichtsteil Titan enthaltender Verbindung (a) — gerechnet als $TiCl_3$- entspricht. Das Polypropylen weist einen in siedendem n-Heptan löslichen Anteil von 1,75 Gew.% auf.

Beispiel 2.

*Herstellung der Titan enthaltenden Komponente*

Es wird ausgegangen von

a) einer Titanverbindung der Formel

$$TiCl_3 . \frac{1}{3} AlCl_3 \text{ und}$$

b) Valeriansäureäthylester.

Die Vermahlung findet in einer Kugelschwingmühle statt, deren Nutzvolumen 10 l beträgt.

Des weiteren wird so verfahren, daß man

(1) die Mühle mit einer Mahlbeschleunigung von 47 $m.sec^{-2}$ betreibt,

(2) die Mühle zunächst mit 2,4 kg der Titan enthaltenden Verbindung (a) beschickt und bei einer Temperatur von + 36°C über eine Zeitspanne von 16 Stunden in Abwesenheit von Verdünnungsmitteln betreibt, dann

(3) unter Mahlen bei einer Temperatur des Mahlgutes von − 15°C die einem Molverhältnis Aluminium in der Titan enthaltenden Verbindung (a): Ester (b) von 1:1 entsprechende Menge des Esters (b) mit einer Geschwindigkeit von 10 ml/Minute pro 2,5 kg Titan enthaltende Verbindung (a) kontinuierlich und in Abwesenheit von Verdünnungsmitteln zugibt, daraufhin

(4) unter Mahlen das Mahlgut auf eine Temperatur von + 40°C bringt und 26 Stunden auf dieser Temperatur hält, anschließend

(5) Stufe 5 entfällt

(6) das gemäß (4) erhaltene Produkt für eine Zeitspanne von 15 Minuten bei einer Temperatur von − 20°C in Abwesenheit von Verdünnungsmitteln vermahlt, sodann

(7) das gemäß (6) erhaltene Produkt zusammenbringt mit der 1,3-fachen seiner Gewichtsmenge Trimethylchlorsilan das Ganze über eine Zeitspanne von 1,5 Stunden auf einer Temperatur von + 58°C hält, und in ein festphasiges sowie ein flüssigphasiges Produkt auftrennt und daraufhin

(8) das gemäß (7) erhaltene festphasige Produkt mit der 3,8-fachen seiner Gewichtsmenge

Heptan wäscht sowie trocknet, und schließlich

(9) das gemäß (8) erhaltene Produkt für eine Zeitspanne von 12 Minuten bei einer Temperatur von −18°C in Abwesenheit von Verdünnungsmitteln nachvermahlt.

*Polymerisation mittels der Titan enthaltenden Komponente*

1,0 g der Titan enthaltenden Komponente sowie 1,8 g Diäthylaluminiumchlorid werden in einen 2-l-Rührkolben gegeben, der mit 1,5 l trockenem Heptan beschickt ist. Sodann wird unter Rühren und bei den — jeweils durch Regelung konstant gehaltenen — Parametern: Propylendruck = 1 bar, Temperatur = 60°C, über eine Zeitspanne von 5 Stunden polymerisiert, wonach die Polymerisation durch Zugabe von 20 ml Methanol abgebrochen wird. Hierauf wird das Suspensionsmedium durch Destillation abgetrennt.

Auf diese Weise werden 210 g Polypropylen erhalten, was einer Produktivität von 271 Gewichtsteilen Polypropylen pro Gewichtsteil Titan enthaltender Verbindung (a) — gerechnet als $TiCl_3$ — entspricht. Das Polypropylen weist einen in siedendem n-Heptan löslichen Anteil von 1,7 Gew.% auf.

Beispiel 3.

*Herstellung der Titan enthaltenden Komponente*

Es wird ausgegangen von

a) einer Titanverbindung der Formel

$$TiCl_3 \cdot \frac{1}{3} AlCl_3 \text{ und}$$

b) Phenylessigsaureäthylester.

Die Vermahlung findet in einer Kugelmühle statt, deren Nutzvolumen 10 l beträgt.

Des weiteren wird so verfahren, daß man

(1) die Mühle mit einer Mahlbeschleunigung von 47 $m.sec^{-2}$ betreibt,

(2) die Mühle zunächst mit 2,5 kg der Titan enthaltenden Verbindung (a) beschickt und bei einer Temperatur von + 36°C über eine Zeitspanne von 16 Stunden in Abwesenheit von Verdünnungsmitteln betreibt, dann

(3) unter Mahlen bei einer Temperatur des Mahlgutes von −15°C die einem Molverhältnis Aluminium in der Titan enthaltenden Verbindung (a): Ester (b) von 1:1 entsprechende Menge des Esters (b) mit einer Geschwindigkeit von 11 ml/Minute pro 2,5 kg Titan enthaltende Verbindung (a) kontinuierlich und in Abwesenheit von Verdünnungsmitteln zugibt, daraufhin.

(4) unter Mahlen das Mahlgut auf eine Temperatur von + 40°C bringt und 24 Stunden auf dieser Temperatur hält, anschließend

(5) Stufe 5 entfällt

(6) das gemäß (4) erhaltene Produkt für eine Zeitspanne von 15 Minuten bei einer Temperatur von −20°C in Abwesenheit von Verdünnungsmitteln vermahlt, sodann

(7) das gemäß (6) erhaltene Produkt zusammenbringt mit der 2-fachen seiner Gewichtsmenge Tri-n-butylchlorstannan, das Ganze über eine Zeitspanne von 1 Stunde auf einer Temperatur von 60°C hält und in ein festphasiges sowie ein flüssigphasiges Produkt auftrennt und daraufhin

(8) das gemäß (7) erhaltene festphasige Produkt mit der 3,8-fachen seiner Gewichtsmenge Heptan wäscht sowie trocknet.

(9) Stufe 9 entfällt.

*Polymerisation mittels der Titan enthaltenden Komponente*

1,0 g der Titan enthaltenden Komponente sowie 1,8 g Diäthylaluminiumchlorid werden in einen 2-l-Rührkolben gegeben, der mit 1,5 l trockenem Heptan beschickt ist. Sodann wird unter Rühren und bei den — jeweils durch Regelung konstant gehaltenen — Parametern: Propylendruck = 1 bar, Temperatur = 60°C, über eine Zeitspanne von 5 Stunden polymerisiert, wonach die Polymerisation durch Zugabe von 20 ml Methanol abgebrochen wird. Hierauf wird das Suspensionsmedium durch Destillation abgetrennt.

Auf diese Weise werden 216 g Polypropylen erhalten, was einer Produktivität von 319 Gewichsteilen Polypropylen pro Gewichtsteil Titan enthaltender Verbindung (a) — gerechnet als $TiCl_3$ — entspricht. Das Polypropylen weist einen in siedendem n-Heptan löslichen Anteil von 1,7 Gew.% auf.

Beispiel 4.

*Herstellung der Titan enthaltenden Komponente*

Es wird ausgegangen von

a) einer Titanverbindung der Formel

$$TiCl_3 \cdot \frac{1}{3} AlCl_3 \text{ und}$$

b) Phenylessigsäureäthylester.

Die Vermahlung findet in einer Kugelschwingmühle statt, deren Nutzvolumen 50 l beträgt.

Des weiteren wird so verfahren, daß man

(1) die Mühle mit einer Mahlbeschleunigung von 48 $m.sec^{-2}$ betreibt.

(2) die Mühle zunächst mit 20,66 kg der Titan enthaltenden Verbindung (a) beschickt und bei einer Temperatur von + 35°C über eine Zeitspanne von 16 Stunden in Abwesenheit von Verdünnungsmitteln betreibt, dann

(3) unter Mahlen bei einer Temperatur des Mahlgutes von −12°C die einem Molverhältnis Aluminium in der Titan enthaltenden Verbindung (a): Ester (b) von 1:1 entsprechenden Menge des Esters (b) mit einer Geschwindigkeit von 11 ml/Min pro 2,5 kg Titan enthaltende Verbindung (a) kontinuierlich und in Abwesenheit von Verdünnungsmitteln zugibt, daraufhin

(4) unter Mahlen das Mahlgut auf eine

Temperatur von + 40°C bringt und 48 Stunden auf dieser Temperatur hält, anschließend

(5) Stufe 5 entfällt

(6) das gemäß (4) erhaltene Produkt für eine Zeitspanne von 25 Minuten bei einer Temperatur von −14°C in Abwesenheit von Verdünnungsmitteln vermahlt, sodann

(7) das Gemäß (6) erhaltene Produkt zusammenbringt mit der 1,3-fachen seiner Gewichtsmenge Trimethylchlorsilan, das Ganze über eine Zeitspanne von 1 Stunde auf einer Temperatur von 58°C hält und in ein festphasiges sowie ein flüssigphasiges Produkt auftrennt und daraufhin

(8) das gemäß (7) erhaltene festphasige Produkt mit der 3,8-fachen seiner Gewichtsmenge Heptan wäscht sowie trocknet und schließlich

(9) das gemäß (8) erhaltene Produkt für eine Zeitspanne von 10 Minuten bei einer Temperatur von −10°C in Abwesenheit von Verdünnungsmitteln nachvermahlt.

*Polymerisation mittels der Titan enthaltenden Komponente*

1,0 g der Titan enthaltenden Komponente sowie 1,8 g Diäthylaluminiumchlorid werden in einen 2-l-Rührkolben gegeben, der mit 1,5 l trockenem Heptan beschickt ist. Sodann wird unter Rühren und bei den — jeweils durch Regelung konstant gehaltenen — Parametern: Propylendruck = 1 bar, Temperatur = 60°C, über eine Zeitspanne von 5 Stunden polymerisiert, wonach die Polymerisation durch Zugabe von 20 ml Methanol abgebrochen wird. Hierauf wird das Suspensionsmedium durch Destillation abgetrennt.

Auf diese Weise werden 272 g Polypropylen erhalten, was einer Produktivität von 381 Gewichtsteilen Polypropylen pro Gewichtsteil Titan enthaltender Verbindung (a) — gerechnet als $TiCl_3$ — entspricht. Das Polypropylen weist einen in siedendem n-Heptan löslichen Anteil von 0,9 Gew.% auf.

Beispiel 5.

*Herstellung der Titan enthaltenden Komponente*

Sie erfolgt wie in Beispiel 4.

*Polymerisation mittels der Titan enthaltenden Komponente*

Es wird gearbeitet mit einem Rühr-Reaktor von 0,8 $m^3$ Inhalt unter einem — durch Regelung dauernd aufrecht erhaltenen — Propylendruck von 28 bar sowie einer Wasserstoffmenge von 70 Nl/h bei einer — durch Regelung dauernd konstant gehaltenen — Reaktionstemperatur von 70°C und in Abwesenheit von Lösungs- bzw. Verdünnungsmitteln in einem Bett von 260 kg kleinteiligem Propylen-Polymerisat. Der Reaktor wird kontinuierlich betrieben, derart, daß — jeweils getrennt voneinander — eingebracht werden 7,45 g/h der Titan enthaltenden Komponente sowie 29 g/h $(C_2H_5)_2AlCl$.

Der Ausstoß des Reaktors ist ein kleinteiliges Polypropylen (mittlere Teilchengröße etwa 0,25 mm); es enthält 23 Gewichts-ppm Titan, weist einen in siedendem n-Heptan löslichen Anteil von 4,9 Gew.% auf und hat eine Intrinsic-Viskosität von

$$2{,}8 \cdot \left[\frac{dl}{g}\right] .$$

**Patentanspruch**

Verfahren zum Herstellen einer Titan enthaltenden Komponente eines Katalysators für die Homo- und Copolymerisation von $C_3$- bis $C_6$-$\alpha$-Monoolefinen nach Ziegler-Natta, wobei man

(a) eine Titan enthaltende Verbindung der allgemeinen Formel

$$TiCl_3 \, . \, nAlCl_3 \; ,$$

worin

n für eine Zahl im Bereich von 0,01 bis 1 steht, und

(b) einen Äther, der insgesamt 4 bis 30 Kohlenstoffatome enthält und die allgemeine Formel

$$R^1—O—R^2$$

hat, worin

$R^1$ und $R^2$ gleich oder verschieden sind und stehen für (I) eine offenkettige 2 bis 15 Kohlenstoffatome aufweisende Alkylgruppe, (II) eine Phenylgruppe oder (III) eine Alkylgruppe mit einer 1 bis 8 Kohlenstoffatome aufweisenden Alkylgruppe, oder

einen Ester, der insgesamt 2 bis 34 Kohlenstoffatome enthält und die allgemeine Formel

$$R^3—O—CO—R^4 \qquad \text{bzw.}$$

$$R^3—O—CO—\underset{R^4}{\underset{|}{C}}=\underset{R^4}{\underset{|}{CH}}$$

hat, worin stehen

$R^3$ für (I) eine 1 bis 16 Kohlenstoffatome aufweisende Alkylgruppe oder (II) eine insgesamt 7 bis 23 Kohlenstoffatome aufweisende Phenylalkylgruppe, wobei bis zu 5 Wasserstoffatome des Phenylrestes durch 1 bis 4 Kohlenstoffatome aufweisende Alkylgruppen substituiert sein können,

$R^4$ für (I) Wasserstoff, (II) eine 1 bis 18 Kohlenstoffatome aufweisende Alkylgruppe, (III) eine insgesamt 7 bis 23 Kohlenstoffatome aufweisende Phenylalkylgruppe, wobei bis zu 5 Wasserstoffatome des Phenyl rests durch 1 bis 4 Kohlenstoffatome aufweisende Akylgruppen substituiert sein können, (IV) eine Phenylgruppe oder (V) eine insgesamt 7 bis 23 Kohlenstoffatome aufweisende Alkylphenylgruppe, wobei bis zu

4 Wasserstoffatome des Phenylrests durch 1 bis 5 Kohlenstoffatome aufweisende Alkylgruppen substituiert sein können,

miteinander vermahlt, *dadurch gekennzeichnet,* daß man

(1) mit einer Kugelschwingmühle arbeitet, die eine Mahlbeschleunigung von 30 bis 80 m.sec$^{-2}$ hat,

(2) die Mühle zunächst mit der Titan enthaltenden Verbindung (a) beschickt und — gegebenenfalls — bei einer Temperatur von − 50 bis + 100°C über eine Zeitspanne von 0,5 bis 100 Stunden in Abwesenheit von Verdünnungsmitteln betreibt, dann

(3) unter Mahlen bei einer Temperatur des Mahlgutes von − 50 bis + 80°C die einem Molverhältnis Aluminium in der Titan enthaltenden Verbindung (a) : Äther bzw. Ester (b) von 1 : 5 bis 1 : 0,05 entsprechende Menge des Äthers bzw. Esters (b) mit einer Geschwindigkeit von 0,01 bis 200 ml pro Minute pro 2,5 kg Titan enthaltende Verbindung (a) kontinuierlich oder in kleinen Portionen und in Abwesenheit von Verdünnungsmitteln zugibt, daraufhin

(4) unter Mahlen das Mahlgut auf eine Temperatur von + 10 bis + 100°C bringt und 5 bis 150 Stunden im Bereich dieser Temperatur hält, anschließend

(5) — gegebenenfalls — das gemäß (4) erhaltene Produkt mit der mindestens 0,6-fachen seiner Gewichtsmenge eines unter Normalbedingungen flüssigen und unterhalb von 150°C siedenden Kohlenwasserstoffs wäscht sowie trocknet, hierauf

(6) — gegebenenfalls — das gemäß (4) bzw. (5) erhaltene Produkt für eine Zeitspanne von 5 bis 60 Minuten bei einer Temperatur von − 50 bis − 10°C in Abwesenheit von Verdünnungsmitteln vermahlt, sodann

(7) das gemäß (4), (5) bzw. (6) erhaltene Produkt zusammenbringt mit der mindestens 0,5-fachen seiner Gewichtsmenge eines Promotors der allgemeinen formel

$$SiX_xR^5_{4-x}$$

— mit der Maßgabe, daß beim Vorliegen von zwei oder mehr Resten $R^5$ in der Verbindung, diese Reste einander gleich sind —,

$$SiX_yR^5_{4-y}$$

— mit der Maßgabe, daß beim Vorliegen von zwei oder mehr Resten $R^5$ in der Verbindung, zumindest zwei dieser Reste voneinander verschieden sind —,

$$SnX_yR^5_{4-y}$$

$$Si(OR^5)_zR^5_{4-z} \text{ oder}$$

$$SiPhR^5_3$$

— mit der Maßgabe, daß beim Vorliegen von zwei oder mehr Resten $R^5$ in der Verbindung, diese Reste einander gleich oder zumindest zwei dieser Reste voneinander verschieden sind —,

wobei in den allgemeinen Formeln stehen

x für 0 bis 4,
y für 0 bis 3,
z für 1 bis 3,
X für Halogen,
$R^5$ für (I) Wasserstoff — mit der Maßgabe, daß in keiner der Verbindungen mehr als drei dieser Reste für Wasserstoff stehen —, (II) eine 1 bis 12 Kohlenstoffatome aufweisende Alkylgruppe oder (III) eine Phenylgruppe,
Ph für eine Phenylgruppe, bei der 0 bis 5 Wasserstoffatome des Phenylrestes substituiert sind durch eine 1 bis 5 Kohlenstoffatome aufweisende Alkyl- bzw. Alkoxygruppe, eine Phenyl- bzw. Phenoxygruppe, ein Chloratom oder eine Trialkylsilylgruppe mit 1 bis 5 Kohlenstoffatome aufweisenden Alkylgruppen,

das Ganze über eine Zeitspanne von 0,2 bis 10 Stunden auf einer Temperatur von 0 bis 250°C hält, und in ein festphasiges sowie ein flüssigphasiges Produkt auftrennt und daraufhin

(8) das gemäß (7) erhaltene festphasige Produkt mit der mindestens 0,4-fachen seiner Gewichtsmenge eines unter Normalbedingungen flüssigen und unterhalb von 150°C siedenden Kohlenwasserstoffs oder eines unter (7) aufgeführten Promotors wäscht sowie trocknet, und schließlich

(9) — gegebenenfalls — das gemäß (8) erhaltene Produkt für eine Zeitspanne von 5 bis 60 Minuten bei einer Temperatur von − 50 bis 0°C in Abwesenheit von Verdünnungsmitteln nachvermahlt.

**Claim**

A process for the manufacture of a titanium-containing component of a catalyst for the Ziegler-Natta homopolymerization or copolymerization of $\alpha$-mono-olefins of 3 to 6 carbon atoms, by milling together

(a) a titanium-containing compound of the general formula

$$TiCl_3 \, . \, nAlCl_3$$

where
n is a number from 0.01 to 1 and

(b) an ether of a total of 4 to 30 carbon atoms, having the general formula

$$R^1—O—R^2$$

where
$R^1$ and $R^2$ may be identical or different and represent (I) open-chain alkyl of 2 to 15 carbon atoms, (II) phenyl or (III) alkyl, where alkyl is of 1 to 8 carbon atoms, or

an ester of a total of 2 to 34 carbon atoms, having the general formula

$$R^3\text{—O—CO—}R^4$$

or

$$R^3\text{—O—CO—}\underset{R^4}{\underset{|}{C}}=\underset{R^4}{\underset{|}{CH}}$$

where

$R^3$ is (I) alkyl of 1 to 16 carbon atoms or (II) phenylalkyl of a total of 7 to 23 carbon atoms, in which up to 5 hydrogens of the phenyl may be substituted by alkyl of 1 to 4 carbon atoms, and

$R^4$ is (I) hydrogen, (II) alkyl of 1 to 18 carbon atoms, (III) phenylalkyl of a total of 7 to 23 carbon atoms, in which up to 5 hydrogens of the phenyl may be substituted by alkyl of 1 to 4 carbon atoms, (IV) phenyl or (V) alkylphenyl of a total of 7 to 23 carbon atoms, in which up to 4 hydrogens of the phenyl may be substituted by alkyl of 1 to 5 carbon atoms,

wherein

(1) a vibratory ball mill having a milling acceleration of from 30 to 80 m.sec$^{-2}$ is used,

(2) the mill is first charged with the titanium-containing compound (a), after which it may or may not be run at from − 50 to + 100°C for a period of from 0.5 to 100 hours in the absence of a diluent, thereafter

(3) whilst milling, with the material in the mill at from − 50 to + 80°C, the amount of the ether or ester (b) which corresponds to a molar ratio of aluminum in the titanium-containing compound (a) to ether or ester (b) of from 1:5 to 1:0.05 is added continuously or in small portions, at a rate of from 0.01 to 200 ml per minute per 2.5 kg of titanium-containing compound (a), in the absence of a diluent, then

(4) the material in the mill is brought to from + 10 to + 100°C whilst being milled, and is kept in this temperature range for from 5 to 150 hours after which

(5) the product obtained from stage (4) may or may not be washed with at least 0.6 times its amount by weight of a hydrocarbon which is liquid under normal conditions and boils below 150°C, and is dried, and following which

(6) the product obtained from stage (4) or (5) may or may not be milled for a period of from 5 to 60 minutes at from − 50 to − 10°C in the absence of a diluent, next

(7) the product obtained from stage (4), (5) or (6) is brought together with at least 0.5 times its amount by weight of a promoter of the general formula

$$SiX_xR^5_{4-x}$$

with the proviso that if two or more radicals $R^5$ are present in the compound, these radicals are identical with one another, or of the general formula

$$SiX_yR^5_{4-y}$$

with the proviso that if two or more radicals $R^5$ are present in the compound, at least two of these radicals are different from one another, or of the general formula

$$SnX_yR^5_{4-y},$$

$$Si(OR^5)_zR^5_{4-z} \text{ or}$$

$$SiPhR^5_3$$

with the proviso that if two of more radicals $R^5$ are present in the compound, these radicals are identical with one another or at least two of these radicals are different from one another, in which general formulae

x is from 0 to 4,

y is from 0 to 3,

z is from 1 to 3,

X is halogen,

$R^5$ is (I) hydrogen, with the proviso that in none of the compounds more than three of these radicals are hydrogen, (II) alkyl of 1 to 12 carbon atoms or (III) phenyl, and

Ph is phenyl, in which from 0 to 5 hydrogens may be substituted by alkyl or alkoxy of 1 to 5 carbon atoms, phenyl or phenoxy, chlorine or trialkylsilyl, where alkyl is of 1 to 5 carbon atoms,

and the batch is kept at from 0 to 250°C for a period of from 0.2 to 10 hours and is separated into a solid-phase product and a liquid-phase product, and thereafter

(8) the solid-phase product obtained from stage (7) is washed with at least 0.4 times its amount by weight of a hydrocarbon which is liquid under normal conditions and boils below 150°C or of a promoter listed under (7), and is dried, following which

(9) the product obtained from stage (8) may or may not be milled for a period of from 5 to 60 minutes at from − 50 to 0°C in the absence of a diluent.

**Revendication**

Procédé pour la préparation d'un élément contenant du titane et entrant dans la composition d'un catalyseur de Ziegler-Natta pour l'homo- et la copolymérisation d'$\alpha$-mono-oléfines à 3—6 C, consistant à broyer ensemble

(a) un composé contenant du titane de formule générale

$$TiCl_3 \,.\, nAlCl_3$$

dans laquelle

n est un nombre se situant dans la gamme de 0,01 à 1, et

(b) un éther qui contient au total 4 à 30 atomes de carbone et répond à la formule générale

$$R^1—O—R^2$$

dans laquelle

$R^1$ et $R^2$ sont semblables ou différents et représentent: (I) un groupe alcoyle à chaîne ouverte contenant 2 à 15 atomes de carbone, (II) un groupe phényle ou (III) un groupe alcoylphényle avec un groupe alcoyle qui contient 1 à 8 atomes de carbone, ou

un ester qui contient au total 2 à 34 atomes de carbone et répond à la formule générale

$$R^3—O—CO—R^4 \quad \text{ou}$$

$$R^3—O—CO—\underset{R^4}{\underset{|}{C}}=\underset{R^4}{\underset{|}{CH}}$$

dans laquelle

$R^3$ représente: (I) un groupe alcoyle comportant 1 à 16 atomes de carbone ou (II) un groupe phénylalcoyle comportant au total 7 à 23 atomes de carbone, jusqu'à 5 atomes de carbone du radical phényle pouvant être substitués par des groupes alcoyle contenant 1 à 4 atomes de carbone,

$R^4$ représente: (I) un hydrogène, (II) un groupe alcoyle contenant 1 à 18 atomes de carbone, (III) un groupe phénylalcoyle contenant au total 7 à 23 atomes de carbone, jusqu'à 5 atomes de carbone du radical phényle pouvant être substitués par des groupes alcoyle contenant 1 à 4 atomes de carbone, (IV) un groupe phényle ou (V) un groupe alcoylphényle contenant au total 7 à 23 atomes de carbone, jusqu'à 4 atomes de carbone du radical phényle pouvant être substitués par des groupes alcoyle contenant 1 à 5 atomes de carbone,

caractérisé en ce que:

(1) on opère avec un broyeur à cuve vibrante à boulets qui a une accélération de broyage de 30 à 80 m.s$^{-2}$,

(2) on charge tout d'abord le broyeur avec le composé (a) contenant du titane et — le cas échéant — on le fait fonctionner à une température de −50 à +100°C pendant une période de 0,5 à 100 heures en l'absence de diluants, puis

(3) on ajoute sous broyage, à une température du produit broyé de −50 à +80°C, la quantité de l'éther ou ester (b) correspondant à un rapport molaire de 1:5 à 1:0,05 de l'aluminium du composé (a) contenant du titane à l'éther ou ester (b), de façon continue à raison de 0,01 à 200 ml par minute et par 2,5 kg de composé (a) contenant du titane ou par petites portions et en l'absence de diluants, puis

(4) on amène sous broyage le produit broyé à une température de +10 à +100°C et on le maintient pendant 5 à 150 heures dans cette plage de température, puis

(5) — le cas échéant — on lave le produit obtenu en (4) avec au moins 0,6 fois son poids d'un hydrocarbure liquide dans les conditions normales et bouillant au-dessous de 150°C et on le sèche, puis

(6) — le cas échéant — on broie le produit obtenu en (4) ou (5) pendant une période de 5 à 60 mn à une température de −50 à −10°C en l'absence de diluants, puis

(7) on mélange le produit obtenu en (4), (5) ou (6) avec au moins 0,5 fois son poids d'un promoteur de formule générale

$$SiX_xR^5_{4-x}$$

— avec cette condition qu'au cas où deux ou plusieurs radicaux $R^5$ sont présents dans le composé, ces radicaux sont semblables entre eux —,

$$SiX_yR^5_{4-y}$$

— avec cette condition qu'au cas où deux ou plusieurs radicaux $R^5$ sont présents dans le composé, au moins deux de ces radicaux sont différents l'un de l'autre —,

$$SnY_yR^5_{4-y}$$

$$Si(OR^5)_zR^5_{4-z} \quad \text{ou}$$

$$SiPhR^5_3$$

— avec cette condition qu'au cas où deux ou plusieurs radicaux $R^5$ sont présents dans le composé, ces radicaux sont semblables entre eux ou au moins deux de ces radicaux sont différents l'un de l'autre—,

les différents symboles ayant les significations suivantes dans les formules générales:

x est un nombre de 0 à 4,
y est un nombre de 0 à 3,
z est un nombre de 1 à 3,
X est un halogène,
$R^5$ est: (I) un hydrogène, avec cette condition que dans aucun des composés, plus de trois de ces radicaux sont des atomes d'hydrogène — (II) un groupe alcoyle contenant 1 à 12 atomes de carbone ou (III) un groupe phényle,
Ph est un groupe phényle, 0 à 5 atomes d'hydrogène du radical phényle étant substitués par un groupe alcoyle ou alcoxy contenant 1 à 5 atomes de carbone, un groupe phényle ou phénoxy, un atome de chlore ou un groupe trialcoylsilyle comportant des groupes alcoyle qui contiennent 1 à 5 atomes de carbone,

on maintient le tout à une température de 0 à 250°C pendant une période de 0,2 à 10 h et on le sépare en un produit en phase solide et un produit en phase liquide, puis

(8) on lave le produit en phase solide obtenu

en (7) avec au moins 0,4 fois son poids d'un hydrocarbure liquide dans les conditions normales et bouillant au-dessous de 150°C ou d'un promoteur tel que défini en (7), on le sèche et enfin

(9) — le cas échéant — on fait subir au produit obtenu en (8) un broyage supplémentaire pendant une période de 5 à 60 mn à une température de — 50 à 0°C en l'absence de diluants.